# EUROPEAN PATENT APPLICATION

(11) **EP 1 369 381 A1**
(43) Date of publication of application: **10.12.2003**
(21) Application number: 03252316.9
(22) Date of filing: 11.04.2003
(51) Int. Cl.: C01B 3/38, C01B 3/40, B01J 37/02, B01J 23/56

(54) **Metal catalyst, its method of preparation and its use**

(30) Priority: 09.05.2002 US 143705
(71) Applicant: THE BOC GROUP, INC., Murray Hill, New Providence, New Jersey 07974-2082 (US)
(72) Inventor: Jiang, Weibin, New Providence, New Jersey 07974 (US); Park, Seungdoo, North Brunswick, New Jersey 08902 (US); Tamhankar, Satish Shankar, Scotch Plains, New Jersey 07076 (US)
(74) Representative: Wickham, Michael

(57) **Abstract**

A metal catalyst comprising a metal supported by a ceria coating disposed on a ceramic monolith; wherein said metal is selected from the group consisting of nickel, cobalt, iron, platinum, palladium, iridium, rhenium, ruthenium, rhodium and osmium; said ceramic is selected from at least one of zirconia, alumina, yttria, titania, magnesia, ceria and cordierite; and said ceria coating has a weight percent between about 5% and about 30% with respect to said ceramic monolith may be as a catalyst of the partial oxidation of a gaseous hydrocarbon to carbon monoxide and hydrogen. The catalyst may be prepared by forming the ceria coating over the ceramic monolith, impregnating the ceria coating with the chosen catalytic metal, and exposing the resulting catalyst to a reducing environment.

## Description

The present invention relates generally to a metal catalyst, its method of preparation and its use in catalytic partial oxidation of hydrocarbons.

The conversion of hydrocarbons to hydrogen and carbon monoxide containing gases is well known in the art. Examples of such processes include catalytic steam reforming, autothermal catalytic reforming, catalytic partial oxidation and non-catalytic partial oxidation. Each of these processes has advantages and disadvantages and produce various ratios of hydrogen and carbon monoxide, also known as synthesis gas.

Partial oxidation is an exothermic reaction wherein a hydrocarbon gas, such as methane, and an oxygen-containing gas, such as air, are contacted with a catalyst at elevated temperatures to produce a reaction product containing high concentrations of hydrogen and carbon monoxide. The catalysts used in these processes are typically noble metals, such as platinum or rhodium, and other transition metals, such as nickel on a suitable support.

Partial oxidation processes convert hydrocarbon containing gases, such as natural gas or naphtha to hydrogen (H₂), carbon monoxide (CO) and other trace components such as carbon dioxide (CO₂), water (H₂O) and other hydrocarbons. The process is typically carried out by injecting preheated hydrocarbons and an oxygen-containing gas into a combustion chamber where oxidation of the hydrocarbons occurs with less than stoichiometric amounts of oxygen for complete combustion. This reaction is conducted at very high temperatures, such as in excess of 700°C and often in excess of 1,000°C, and pressures up to 150 atmospheres. In some reactions, steam or CO₂ can also be injected into the combustion chamber to modify the synthesis gas product and to adjust the ratio of H₂ to CO.

A significant drawback of these prior art partial oxidation processes is the relatively high temperature required for initiating the reaction. As stated above, the partial oxidation reaction is exothermic and once the reaction is started, the heat of the reaction will maintain the elevated temperature without the addition of external heat energy. However, since the process requires temperatures in excess of about 350°C to start or initiate the reaction, an external heat source is often required. Of course, this requires additional capital costs and adds engineering complexities to the process thereby reducing its commercial attractiveness. Therefore, there is an ongoing need for other alternative methods of initiating the reaction at lower temperatures.

Furthermore, during the formation of synthesis gas by partial oxidation of hydrocarbons, small amounts of H₂O and CO₂ are also formed as a result of combustion reactions. The combustion reactions are not desirable because they compete with the partial oxidation reaction for the available oxygen source, and result in lower than expected conversion of the hydrocarbons. Thus, it is desirable to minimize the formation of combustion products such as H₂O and CO₂ and increase the selectivity for desired products such as H₂ and CO.

More recently, partial oxidation processes have been disclosed in which the hydrocarbon gas is contacted with the oxygen-containing gas at high space velocities in the presence of a catalyst such as a metal deposited on a monolith support. The monolith supports are impregnated with a noble metal such as platinum, palladium or rhodium, or other transition metals such as nickel, cobalt, chromium and the like. Typically, these monolith supports are prepared from solid refractory or ceramic materials such as alumina, zirconia, magnesia and the like. During operation of these reactions, the hydrocarbon feed gases and oxygen-containing gases are initially contacted with the metal catalyst at temperatures in excess of 350°C, typically in excess of 600°C, and at a standard gas hourly space velocity (GHSV) of over 100,000 hr⁻¹.

A monolith support is generally a ceramic foam-like or porous structure formed from a single structural unit having passages disposed in either an irregular or regular pattern with spacing between adjacent passages. Examples of such irregularly patterned monolith substrates include filters used for molten metals. Examples of regularly patterned substrates include monolith honeycomb supports used for purifying exhausts from motor vehicles and used in various chemical processes. Preferred are the ceramic foam structures having irregular passages. Both types of monolith support structures made from conventional refractory or ceramic materials such as alumina, zirconia, yttria, and mixtures thereof, are well known and commercially available from, among others, Corning, Inc.; Vesuvius Hi-Tech Ceramics, Inc.; and Porvair Advanced Materials, Inc.

As disclosed in US 5,023,276, the surface area of certain monolithic supports can also be increased by depositing a refractory metal oxide support layer on the monolith before dispersing catalytic metal on the support layer. Such support coatings may include alumina, beryllia, zirconia, baria-alumina, magnesia, silica, and combinations thereof. In the case of an alumina coating, one or more of the oxides of lanthanum, cerium, praseodymium, among others, usually in amounts of about 2-10 wt. % of the stabilized coating, can be provided as a stabilizer against undesirable phase transition of the alumina support coating.

It is known that ceria, a stable fluorite-type oxide, has redox properties that can be enhanced in the presence of a metal or metal oxide. Recently, a ceria monolith has been used in a metal catalyst to provide an improved partial oxidation process. As disclosed in US-A-2001/0041159 and EP-A-1 134 188, catalytic partial oxidation of hydrocarbons can be initiated at relatively low temperatures using a reduced metal catalyst containing a transition or noble metal supported by a ceria monolith, resulting in high conversion of the hydrocarbon and high product selectivity.

By using a ceria-coated monolith, the present invention provides an alternative to the aforementioned ceria monolith in which the amount of ceria and metal loading required for such enhanced catalytic effects are significantly reduced.

One aspect of the present invention provides a metal catalyst consisting essentially of a metal supported by a ceria coating disposed on a ceramic monolith; wherein the metal is selected from at least one of nickel, cobalt, iron, platinum, palladium, iridium, rhenium, ruthenium, rhodium and osmium; the ceramic is selected from at least one of zirconia, alumina, yttria, titania, magnesia, ceria and cordierite; and the ceria coating has a weight percent between about 5% and about 30% with respect to the ceramic monolith. In one embodiment, the ceramic is selected from at least one of zirconia, yttria, titania, magnesia ceria and cordierite.

Another aspect of the invention provides a method of preparing a metal catalyst, comprising: (a) providing a ceramic monolith; (b) forming a ceria coating over the ceramic monolith; (c) incorporating a metal into the ceria coating to form a metal-impregnated ceria coating; and (d) exposing the metal-impregnated ceria coating to a reducing environment; wherein the metal is selected from at least one of nickel, cobalt, iron, platinum, palladium, iridium, rhenium, ruthenium, rhodium and osmium; the ceramic is selected from at least one of zirconia, alumina, yttria, titania, magnesia, ceria and cordierite; and the ceria coating has a weight percent between about 5% and about 30% with respect to the ceramic monolith. In one embodiment, the ceramic is selected from at least one of zirconia, yttria, titania, magnesia, ceria and cordierite.

According to yet another aspect of the invention, a process is provided for the partial oxidation of hydrocarbons to produce hydrogen and carbon
monoxide. The process comprises contacting a feed gas mixture containing a hydrocarbon gas and an oxygen-containing gas with a catalytically effective amount of a reduced metal catalyst consisting essentially of a metal supported by a ceria coating disposed on a ceramic monolith; wherein the metal is selected from at least one of nickel, cobalt, iron, platinum, palladium, iridium, rhenium, ruthenium, rhodium and osmium, and the partial oxidation has an initiation temperature of below about 250°C.

As used herein, "metal catalyst" refers to the entire catalyst structure including the metal, the monolith substrate and any coating layer or matrix structure provided thereon. As defined above, the metal catalyst contains a transition or noble metal impregnated in a ceria coating layer supported by a ceramic monolith substrate. In one embodiment, the metal catalyst is used in partial oxidation of hydrocarbons. The metal catalyst prepared in this manner has excellent metal dispersion over the ceria coating and allows superior performance to be achieved with a much smaller amount of metal compared to conventional catalysts prepared using other techniques.

In one illustrative embodiment, excellent performance results are achieved for the partial oxidation of CH₄ using about 0.2% rhodium dispersed on a ceria-coated zirconia monolith. Furthermore, the ceria-coated monolith can readily be scaled up, while avoiding potential fabrication problems as discussed below.

For commercial applications, a large size monolith, e.g., greater than about 3" diameter, is generally desired. However, ceria becomes very brittle at temperatures higher than about 800°C, and fabrication problems have been encountered for larger size monoliths due to mechanical stress under certain processing conditions. For example, a monolith substrate made of pure ceria, which has a relatively high thermal expansion coefficient, may experience substantial shrinkage upon cooling during the fabrication process. Since ceria has a high density, a large ceria disc may also bow under its own weight during operation at high temperatures. It is believed that such shrinkage or mechanical stress result in the formation of cracks in larger monolith substrates. Furthermore, during certain catalytic reactions, the temperature can often rise to above 1000°C, posing potential reliability issues for catalyst supports made of pure ceria.

This problem can be overcome by the present invention, in which a ceria coating is formed over the ceramic monolith before the incorporation of a metal. Enhanced catalytic performance is achieved with the ceria-coated monolith providing excellent metal dispersion characteristics and a mechanically strong and thermally stable support with high surface area. In general, the monolith may have a porosity between about 10 and about 100 pores per inch (ppi), and comprises a ceramic material that is compatible with the ceria coating - i.e., without causing adverse effect on the metal catalyst. Such ceramics may include refractory oxides such as zirconia, alumina, yttria, titania, magnesia, cordierite, and combinations thereof, among others. Of course, depending on the specific process and applications, ceria can still be used as the base monolith, especially if fabrication issues are not of concern. Furthermore, the monolith may comprise combinations of one or more of these and other ceramics.

The metal catalyst of the present invention can generally be used in a variety of process applications, e.g., partial oxidation, shift reactions, steam reforming, carbon dioxide reforming or other selective oxidation processes. However, when alumina is used as the base monolith with a ceria coating, the resulting catalyst has been found to date to be significantly less effective for partial oxidation of hydrocarbons. For example, it has been found that, with a metal catalyst having about 0.5% Rh loading on a 10 wt.% ceria-coated alumina monolith, partial oxidation of CH₄ could not be initiated even at a temperature of about 450°C (using a feed gas mixture comprising about 64.2% by volume CH₄, about 34.1% by volume of O₂ and about 1.7% by volume of N₂ at a space velocity of about 157,000 hr⁻¹). While not intending to be bound to theory, it is believed that a structural change resulting from an interaction between ceria and alumina may be responsible for the lack of enhanced catalytic effect. However, it is believed that enhanced catalytic effect for partial oxidation can be obtained at different processing conditions or with different amounts of metal loading or ceria coating with additional experimentation. For the purpose of partial oxidation of hydrocarbons, it is preferable that the monolith be made of a ceramic selected from at least one of zirconia, yttria, titania, magnesia, ceria and cordierite. If alumina is used at all, it is preferably present only in a small amount so as to avoid adverse impact on the activity of the metal catalyst.

Two approaches have been used for preparing the metal catalyst of the present invention. In one approach, a ceria coating is formed on a monolith by exposing the monolith substrate to a suitable source containing cerium, e.g., a cerium salt solution. A metal is then incorporated into the ceria coating in a subsequent step. In the other approach, the morphology of the monolith surface is modified by introducing a matrix-forming agent, so that a porous matrix structure is formed over the monolith. A ceria layer is then coated over the matrix structure, followed by impregnation with the metal. The strong adhesion between the ceria coating and the matrix or monolith substrate provides a metal catalyst that remains mechanically strong even under severe process conditions during fabrication or reactions. Details of the preparation of the metal catalyst will be presented below.

Although the monolith substrate used in the present invention is coated with a layer of ceria (cerium dioxide), a mixture of cerium oxides with Ce⁴⁺ and Ce³⁺ oxidation states (e.g., CeO₂ and Ce₂O₃) can also be used. As used herein, the term "ceria" shall include all forms of cerium oxides. In general, the ceria coating preferably contains substantially pure compositions of cerium oxides. However, it is possible that composites or mixtures of other ceramic or refractory materials, e.g., up to about 10% by weight with reference to the weight of the ceria coating, may also be present, as long as these other materials do not adversely impact the catalytic activity of the resulting metal catalyst.

The ceria-coated monolith substrates provide superior performance compared to conventional monolith substrates made primarily from other ceramic materials such as alumina, zirconia and mixtures of such materials. Ceria is known to have oxygen storage capacity and can exchange a certain amount of oxygen atoms from its structure with the surrounding atmosphere, depending on the availability or lack of oxygen in the surrounding. For certain applications, it is preferable that the metal and the ceria-coating be reduced prior to being used in a catalytic process. When oxygen-starved in this manner, ceria is found to have a very strong affinity for oxygen, and the subsequent oxygen uptake can be exothermic, generating localized high temperatures. In addition, in the presence of ceria, the metal remains in a substantially reduced form thereby rendering it catalytically more active. It is believed that this occurs because oxygen is picked up preferentially by ceria instead of by the metal.

In conventional practice with monolith-based catalysts, a wash coat comprising a thin layer of refractory material may be applied to the monolith in order to increase the surface area. Typically, the surface area of the substrate (with reference to each gram of the monolith) can be increased from less than about 1 meter²/gram (m²/g) to at least 10 m²/g. Unlike the ceria coating of the present invention, the wash coat usually constitutes only a small weight percent compared to the monolith - e.g., a commercially available monolith may have a ceria wash coat of about 1-2 wt.% with respect to the weight of the monolith. Such a metal catalyst (with about 0.5 wt.% Rh loading on the ceria wash coat) does not exhibit the enhanced catalytic activity offered by the present invention, such as low temperature initiation. Instead, it is found that a temperature of at least about 400°C is required for initiating the partial oxidation of CH₄. If desired, such a wash coat may also be used in conjunction with the metal catalyst of the present invention, e.g., by applying a wash coat to the monolith substrate prior to forming the ceria coating.

The metals used in the present catalysts are selected from certain transition and noble metals of the Periodic Table of Elements. Suitable metals include nickel, cobalt, iron, platinum, palladium, iridium, rhenium, ruthenium, rhodium and osmium; with nickel, platinum, palladium and rhodium being preferred. More preferred are nickel and rhodium. The most preferred metal of this group is rhodium. The metals may be present on the monolith substrate in the form of metals, metal oxides, metal halides or other metal salts prior to being reduced. Upon reduction, as described below, the metals will be substantially in the metallic form. Generally, about 0.2% to about 5% by weight of the metal (referenced to the weight of the monolith substrate) can be deposited on the ceria-coated monolith substrate, although higher percentages may also be used as necessary.

Metal catalysts of the present invention are found to provide catalytic activities that are superior to conventional catalyst systems, allowing the use of smaller amounts of metal than otherwise possible. For example, the inventive preparation method provides significant improvement in metal dispersion and allows higher catalytic performance to be achieved (e.g., over 90% CH₄ conversion and product selectivity) with smaller amounts of metal, e.g., less than about 5 wt.%, and preferably, less than about 0.5 wt.%. Conventional monolith-based catalysts, however, often require at least 5 wt.% loading of noble metal to achieve similar results.

### Preparation of the metal catalyst

The metal catalyst of the present invention has been prepared using two approaches as described below, although other variations known to one skilled in the art may also be acceptable. In one approach, a porous ceramic monolith substrate, e.g., comprising a refractory material such as zirconia, alumina, titania, yttria, magnesia, ceria or cordierite, is first immersed in a suitable salt solution containing cerium. After drying at room temperature, the coated ceramic monolith is sintered at high temperatures, e.g., between about 400°C and about 800°C, preferably between about 500°C and about 600°C. A scale-type structure of ceria is formed on the surface of the base monolith. The bonding between the ceria coating and the monolith is sufficiently strong to withstand severe reaction conditions of high temperature and high space velocity, e.g., about 1000°C and space velocity of about 400,000 hr⁻¹.

Different cerium salts such as cerium nitrate, cerium chloride, cerium ammonium nitrate, among others, can be used as a source of cerium to form the ceria coating. It is known that the solubility of cerium nitrate increases dramatically with temperature. Thus, in one embodiment, a super-concentrated cerium nitrate solution, e.g., about 30-40 wt. %, is first prepared at a temperature of about 60°C. Upon cooling to room temperature, the solution becomes a slightly sticky, transparent gel. The ceramic monolith is immersed in the gel for about 1 hour, and dried under vacuum at room temperature for about 2 hours, resulting in the formation of a layer of ceria over the monolith surface. The ceria-coated monolith is then heated or calcined at about 500°C in air in order to decompose any remaining salts and to insure good bonding between the monolith and the ceria coating.

To achieve catalytic performance often desired in commercial applications, the ceria coating should preferably be present in an amount between about 5 wt.% to about 30 wt.%, more preferably between about 10 wt.% to about 20 wt.%, with respect to the monolith substrate. For example, if the ceria coating is below about 5 wt.%, no enhanced catalytic effect is obtained for partial oxidation of CH₄ compared to conventional catalysts in which the metal is dispersed on the monolith substrate in the absence of the ceria coating. On the other hand, if the amount of ceria coating is higher than about 30 wt.%, significant blockage of the pores is observed in a 30-90 ppi monolith, and the resulting ceria coating also has undesirable physical properties such as brittleness at high temperatures.

The metal is then incorporated or impregnated in the coated monolith substrate by immersing the ceria-coated monolith substrate in a saturated metal salt solution for a sufficient time period to provide the desired amount of metal loading, e.g., about 1-3 hrs., and allowing it to dry at room or elevated temperatures. Examples of metal salt solutions include rhodium nitrate, rhodium chloride, and rhodium acetate, or more generally, the nitrates, chlorides and acetates of the transition or noble metal of interest, at a concentration range of about 1-20 wt.%. The metal-impregnated ceria coating is then calcined under suitable conditions as generally known to one skilled in the art, e.g., at about 500-600°C for about 4-12 hrs.. If desired, the metal catalyst can also be reduced at this stage with H₂ at about 500-600°C for about 4-12 hrs. As used herein, a reduced metal catalyst refers to at least the metal and ceria coating being in a reduced state, but the base monolith does not necessarily have to be reduced.

For certain applications, it is desirable to have the catalyst in a reduced state prior to being used in the particular process. For example, in order to achieve low initiation temperatures in partial oxidation of hydrocarbons, at least the metal and the ceria coating should be reduced. This can be achieved by exposing the metal catalyst to a variety of reducing environments for a sufficient time period, preferably at an elevated temperature. The reduced ceria-coating may comprise ceria with oxygen present in less than the stoichiometric amount relative to cerium, e.g., CeO₂₋ₓ, where x is greater than zero but not greater than 0.5, and both the metal and the ceria coating should preferably be reduced to completely remove the mobile oxygen from the ceria coating and bound oxygen from the metal.

The metal catalyst can be reduced as part of the catalyst preparation process, or reduced in-situ in a catalytic reactor just prior to being used in a catalytic process. Different reducing environments can be used for this purpose, e.g., a hydrogen-rich atmosphere, a non-reactive reducing atmosphere, or a reactive and reducing atmosphere, among others. In one embodiment, the calcined metal catalyst is exposed to a substantially pure hydrogen (H₂) environment at atmospheric pressure and a temperature of about 550°C for about 8 hours. The resulting metal catalyst is sufficiently reduced to initiate the partial oxidation reaction of methane (CH₄) at lower temperatures than possible with a similar metal catalyst prepared with a conventional zirconia monolith. The process conditions are given primarily for illustrative purpose, and other combinations of process conditions are also acceptable to achieve the desired degree of reduction.

Furthermore, reduction can also be accomplished by exposing the metal catalyst to a reactive environment, e.g., a reaction between H₂ and O₂, that encompasses a reducing atmosphere. The degree of reduction of the catalyst is indicated by the speed of pickup of oxygen by the reduced catalyst when exposed to an oxygen containing atmosphere. If the catalyst is not sufficiently reduced, the partial oxidation reaction will not start until a temperature of greater than about 350°C is reached.

Examination of a sample of a metal catalyst (about 1 wt.% Rh loading and 10 wt.% ceria coating over a zirconia monolith with a porosity of about 45 ppi) using scanning electron microscopy reveals the formation of a scale-type of structure on the surface of the monolith substrate. Such a structure is strong enough to withstand severe reaction conditions encountered in partial oxidation reactions. Element-mapping data of Rh indicates that the Rh metal particles are homogeneously dispersed on the surface and has a surface area per gram of monolith in the range of about 1-3 m²/g. Furthermore, when a metal catalyst with about 0.2 wt.%Rh loading and a 10 wt.% ceria coating over a zirconia monolith is used in partial oxidation of CH₄, a CH₄ conversion of about 95% can be achieved for a feed gas mixture with a CH₄/O₂ ratio of around 1.8.

Another approach of preparing the metal catalyst involves further increasing the surface area of the monolith substrate prior to the formation of the ceria coating. This is accomplished by forming a porous matrix layer over the monolith. For example, the porous matrix structure can be produced by applying a zirconia-containing slurry onto the zirconia monolith. The slurry is formed by mixing zirconia powder with matrix formers, binders and a dispersant at room temperature. Matrix formers can include one or any combination of graphite (about 100-325 mesh), polymer such as polymethyl methacrylate (about 100-300 mesh) and zircon fiber (about 1-50 micron). Binders and dispersants are commercially available from the Duramax series of products of Rohm and Haas. The relative amount of matrix formers is about 0.05-0.5 g/g compared to zirconia powder. The relative amounts of binder and dispersant are about 0.2-0.4ml/g and about 0.2-0.3ml/g compared to zirconia powder, respectively.

When the slurry-coated monolith is sintered at a relatively high temperature, e.g., about 1200°C to about 1600°C, a porous matrix structure is formed. This matrix-modified monolith exhibits good adhesion between the matrix and the zirconia monolith. A ceria coating can then be formed over the porous matrix layer, and a suitable metal incorporated into the ceria-coated matrix by wet impregnation using techniques as previously described. Since the ceria and metal are incorporated in the matrix layer, the resulting catalyst system is extremely stable even under severe reaction conditions, such as high temperatures and high flow rates of feed and product gases. The metal catalyst is subsequently reduced as appropriate.

### Partial Oxidation of Hydrocarbons

Although the metal catalyst of the present invention may be used in a variety of catalytic processes, it is particularly well-suited for partial oxidation of hydrocarbons to generate a synthesis gas (mixture of H₂ and CO). In such an application, several advantages can be achieved, including a high conversion of the hydrocarbon at high space velocities, high selectivities for H₂ and CO (with respect to H₂O and CO₂) and a low initiation temperature.

As previously mentioned, the metal catalyst is a singular unit of varying dimensions, and can be used in different reactors of varying designs or sizes. For example, the reactor can be a pipe or tube of suitable material and construction having a diameter of up to about 100 inches (about 254 cm), or even larger, if desired. The feed gas mixture is fed into one end and the partial oxidation reaction occurs on the metal catalyst with the product gas exiting from the other end. The metal catalyst can also comprise of multiple monolith units to form an assembly of units disposed in end-to-end arrangements. It is preferred that the metal catalyst have a porosity and orientation so as to minimize the pressure drop of the feed gas through the catalyst. Moreover, multiple individual reactors can be used to form an assembly of reactors disposed in a side-by-side arrangement for increased production. For example, multiple pipes or tubes can be packed together as an assembly to form a single reactor unit with each individual pipe containing the metal catalyst.

The hydrocarbon-containing feed gas, which can be used with the present invention, will typically contain alkanes or alkenes with one to eight carbon atoms (C₁-C₈). The partial oxidation of the lower members, e.g., C₁-C₅ alkanes, and methane, in particular, can benefit most from the use of the metal catalyst, because lower member alkanes tend to require a higher temperature for initiation. Of course, natural gas and certain refinery off gases containing methane or higher hydrocarbons can also be employed. Alternatively, gasoline, diesel, methanol and other sources of fuel may be adapted for use in the present process. The oxygen-containing gas can be air, air enriched with oxygen, oxygen mixed with other gases, and pure oxygen.

Various ratios of the hydrocarbon-containing feed gas and the oxygen-containing feed gas can be used in the feed gas mixture. The precise gas mixture introduced into the reaction zone will depend on the particular hydrocarbons chosen and the amount of oxygen necessary to conduct the partial oxidation reaction. Operable ratios can be easily determined by one skilled in the art.

The partial oxidation process is conducted by contacting mixtures of the hydrocarbon-containing feed gas and the oxygen-containing feed gas with the metal catalyst at contact times ranging from about 1 to 500 milliseconds depending on the particular feed gases, catalyst, pressure and space velocity employed. Under typical operating conditions, the feed gas will be introduced at a standard gas hourly space velocity of between about 50,000 and about 500,000 hr⁻¹ and preferably between about 150,000 and about 300,000 hr⁻¹. The linear space velocity is about 0.5 to 5.0 feet per second. The process is conducted at pressures from about 1 to about 20 atmospheres (atm) and preferably from about 1 to 5 atm. Generally, higher space velocities can be employed with higher concentrations of oxygen in the oxygen-containing feed gas.

For the purpose of partial oxidation of hydrocarbons, it is preferred that the volumetric ratio of the hydrocarbon-containing gas and the oxygen-containing gas in the feed gas mixture of interest has a carbon to oxygen (C:O₂) ratio between about 1.5 and about 2, more preferably between about 1.6 and about 1.9. It is understood, of course, that reactions having C:O₂ ratios of less than about 1.5 can also be conducted at low initiation temperatures using metal catalysts of the present invention. However, these reactions may be characterized more as combustion-like processes, instead of partial oxidation processes. In general, feed gas mixtures having higher C:O₂ ratios tend to require higher initiation temperatures. However, with the use of metal catalysts of the present invention, partial oxidation reactions can be initiated at relatively low temperatures such as below about 150°C, even for C:O₂ ratio as high as about 1.9. Thus, embodiments of the present invention provide an important advantage over conventional partial oxidation processes.

Aside from the C:O₂ ratio, the initiation temperature also depends on the number of carbon atoms contained in the hydrocarbon fuel. In general, the lower hydrocarbons (i.e., those with less carbon atoms) require higher initiation temperatures for partial oxidation reactions. Therefore, embodiments of the present invention are particularly well-suited for use with lower hydrocarbons, e.g., those with less than about five carbon atoms, especially methane, by providing lower initiation temperatures. Although higher hydrocarbons may not benefit as much as far as initiation temperatures are concerned, metal catalysts of the present invention can still provide other benefits, such as improved selectivity and increased product yields for H₂ and CO, compared with conventional catalysts.

As previously mentioned, the metal and the ceria coating may be pre-treated or reduced in situ inside the catalytic reactor. Thus, in one embodiment, the metal catalyst can be exposed to an exothermic reaction in the presence of a reducing environment prior to conducting the partial oxidation reaction. For example, the metal catalyst can be contacted with a mixture of about 4-10% H₂ and about 1-2% O₂ in N₂ at room temperature, at a gas hourly space velocity (GHSV) of about 4000-10,000 hr⁻¹. Since the H₂/O₂ reaction is highly exothermic, it can heat up the catalyst, e.g., to a temperature of about 100-200°C. Furthermore, by having an excess of H₂ in the pre-treatment feed mixture, a reducing atmosphere is rendered, so that the catalyst can be reduced at the elevated temperature. Such a reaction will reduce the metal and the ceria coating while at the same time heat the metal catalyst to a temperature at which partial oxidation can be initiated. Once the metal catalyst reaches the initiation temperature, e.g., about 200°C, or typically less than about 250°C, the H₂/O₂ reaction can be terminated.

The partial oxidation reaction is then initiated by contacting a feed gas mixture of hydrocarbon-containing and oxygen-containing gases (with a C:O₂ ratio between about 1.5 and 2.0) with the metal catalyst. As the partial oxidation process commences, the reaction will continue to transfer heat energy to the catalyst raising the temperature of the catalyst to a range of about 500°C to 1000°C. The in-situ catalyst pre-treatment, which allows the catalyst to be reduced and pre-heated in a single step, also eliminates the need for an external heat source thereby reducing the capital costs of the process.

In another embodiment, in-situ pre-treatment or reduction of the metal catalyst can be achieved simply by conducting a partial oxidation reaction, in which the metal catalyst is exposed to a reducing atmosphere such as that characterized by a high C:O₂ ratio (not necessarily containing H₂). Once the metal catalyst is used in the partial oxidation reaction, the metal and the ceria coating are converted into a reduced state and will remain so as long as they are not exposed to air or oxygen alone. Thus, a synthesis gas plant, after a plant shut-down, may be re-started with a feed gas mixture of natural gas and air, or O₂, at about 200°C or below, without the need for further treatment of the metal catalyst.

In the case of a freshly prepared metal catalyst, or one which is already reduced, e.g., by H₂ in a furnace, pre-heating of the catalyst up to about 150-200°C may suffice to allow initiation of partial oxidation reactions. Such pre-heating of the catalyst may be carried out by using hot N₂ or other inert gases such as argon, or an exothermic reaction involving H₂ and O₂.

The invention process provides a higher conversion of CH₄ to H₂ and CO-e.g., in the range of about 10% to 15% higher conversion compared to that expected from conventional partial oxidation processes. Furthermore, the production of other unwanted components such as H₂O and CO₂, can be minimized.

The following examples illustrate the improved partial oxidation process of the present invention. A reactor comprising a tube with a diameter of about 1 inch (25.4mm) was used in these examples. The zirconia (ZrO₂) monoliths, with a diameter of about 0.73 inch (18mm) and a porosity of about 45 pores per inch, were obtained from Vesuvius Hi-Tech Ceramics. In each of the examples below, prior to conducting the partial oxidation reaction, the metal catalyst was reduced by exposing it to a pure H₂ environment at atmospheric pressure and a temperature of about 550°C for about 8 hrs. in a furnace. Furthermore, before the feed gas mixture was introduced into the reactor, the metal catalyst inside the reactor was heated in the presence of nitrogen (N₂) to a temperature that is sufficiently high for subsequent initiation of the partial oxidation reaction.

The invention is further illustrated by the following Examples.

### Example 1

A conventional metal catalyst was prepared by impregnating a ZrO₂ monolith with about 5% by weight of rhodium (Rh) metal using a rhodium nitrate solution with a concentration of about 10% at about room temperature.

Prior to the reaction, the reactor containing the metal catalyst was preheated at about 400°C for about 15 minutes in the presence of N₂. A feed gas mixture containing about 64.2% by volume of CH₄, about 34.1% by volume of O₂ and about 1.7% by volume of N₂ was then passed into the reactor containing the metal catalyst at a space velocity of about 157,000 hr⁻¹. It was found that the reaction could not be initiated at a temperature below about 400°C. Upon initiation of the reaction at about 400°C, a rapid rise in the reactor temperature to above 840°C was observed, with the production of H₂ and CO. The resulting product gas contained about 59.1% H₂, about 30.1% CO, about 1% N₂, about 1.5% carbon dioxide (CO₂), about 5.27% CH₄ and about 3% water (H₂O). The CH₄ conversion rate, H₂ and CO selectivities were calculated from the measured concentrations in the product gas. The results are shown in Table 1 below.

### Example 2

A metal catalyst was prepared as described in Example 1. The same procedure as in Example 1 was repeated except that a space velocity of about 314,000 hr⁻¹ was used. Results are shown in Table 1 below.

### Example 3

A metal catalyst was prepared as described in Example 1, except that only about 2.5% Rh metal was loaded on the ZrO₂ support. The same procedure as described in Example 1 was repeated and the reaction was initiated at about 400°C. Results are shown in Table 1 below.

**Table 1**

| | % Rh on ZrO₂ | Space Vel. (hr⁻¹) | CH₄ conversion | H₂ selectivity | CO selectivity | Initiation Temp. |
|---|---|---|---|---|---|---|
| Ex.1 | 5 | 157,000 | 85.3% | 92.0% | 95.2% | 370°C |
| Ex. 2 | 5 | 314,000 | 83.6% | 90.8% | 95.3% | 400°C |
| Ex. 3 | 2.5 | 157,000 | 64.2% | 86.0% | 89.2% | 400°C |

### Example 4

A metal catalyst having a ceria-coated monolith was prepared as previously described for the present invention. A ZrO₂ monolith was coated with about 10% by weight of ceria by immersing it in a cerium nitrate solution with a concentration of about 40% for about 1 hour at about 60°C. After drying under vacuum at room temperature, the ceria-coated monolith was impregnated with about 1% by weight of Rh metal - e.g., using a rhodium nitrate solution with a concentration of about 5%.

The reactor containing the metal catalyst monolith was then preheated at about 150°C for about 15 minutes in the presence of nitrogen. A feed gas mixture containing about 64.2% by volume of CH₄, about 34.1% by volume of O₂ and about 1.7% by volume of N₂ was then introduced into the reactor containing the metal catalyst at a space velocity of about 157,000 hr⁻¹ and a temperature of about 150°C. After the reaction was initiated at this temperature, the reactor temperature rapidly rose to above 1000°C with the production of H₂ and CO. The resulting product gas contained about 60.1% H₂, about 31.6% CO, about 1% nitrogen, about 0.9% CO₂, about 0.48% CH₄ and about 5% H₂O. The CH₄ conversion rate and selectivities for H₂ and CO formation were calculated from the measured concentrations in the product gas, and results are shown in Table 2 below.

### Example 5

A metal catalyst was prepared as described in Example 4. The same procedure as described in Example 4 was repeated except that a space velocity of about 314,000 hr⁻¹ was used. The results are shown in Table 2 below.

### Example 6

A metal catalyst was prepared as described in Example 4, except that only about 0.2% rhodium metal was loaded on the ceria-coated ZrO₂ support. The same procedure as described in Example 4 was repeated and the reaction was initiated at about 150°C. Results are shown in Table 2 below.

### Example 7

A metal catalyst with a ceria coating on a matrix-modified ZrO₂ monolith was prepared according to the procedure previously described. A porous matrix was formed on a ZrO₂ monolith by applying a slurry onto the ZrO₂ monolith and following procedures previously described. In this case, the slurry contains about 12.1 wt.% of ZrO₂ powder, about 36.4% Zr fiber, about 24.3 wt.% of a binder (e.g., Duramax B-1000 or B-1014 from Rohm and Haas), about 1.9 wt.% of dispersant (Duramax D-3021 from Rohm and Haas), and about 25.3 wt.% of water. All components were stirred in a beaker for about 12 hours at room temperature. The resulting slurry was applied onto the monolith, and when suction was provided with a vacuum pump, the slurry penetrated through the monolith and coated the entire surface of the monolith. The slurry coated monolith was then sintered at about 1550°C and 1atm. in air for about 8 hours.

The matrix-modified monolith, with a matrix of about 15 wt.% compared to the monolith, was then coated with about 10% by weight of ceria, and impregnated with about 0.2% by weight of Rh metal (compared to the weight of the monolith) using the procedures previously described. The reactor containing the metal catalyst monolith was preheated at about 210°C for 15 minutes in the presence of nitrogen. The same procedure was repeated as in Example 2 except that the initiation temperature was 210°C. The results are shown in Table 2 below.

**Table 2**

| % Rh on ceria-Initiation coated ZrO₂ | Space Vel. (hr⁻¹) | CH₄ conversion | H₂ selectivity | CO selectivity | Temp |
|---|---|---|---|---|---|
| Ex. 4 1 | 157,000 | 98.6% | 96.9% | 96.6% | 150°C |
| Ex. 5 1 | 314,000 | 93.4% | 93.1% | 95.7% | 150°C |
| Ex. 6 0.2 | 314,000 | 97.5% | 94.6% | 95.7% | 150°C |
| Ex. 7 0.2 matrix-modified | 314,000 | 97.6% | 94.4% | 95.7% | 210°C |

Examples 4-7 illustrate that embodiments of the present invention allow partial oxidation of hydrocarbons to be initiated at temperatures lower than those achievable using comparable amounts of conventional catalysts as in Examples 1-3. In particular, the present invention allows partial oxidation of CH₄ to be initiated at temperatures below about 250°C, e.g., below about 220°C and even below about 150°C. In addition, it has been found that with a freshly prepared catalyst (about 1% Rh on a ceria-coated ZrO₂ monolith), partial oxidation can be initiated at temperatures below about 100°C, e.g., at about 90°C. For the metal catalyst with the matrix-modified monolith (Example 7), it is believed that initiation temperatures can further be reduced to below about 200°C if Rh loading is increased above 2.5%.

As shown in Table 2, the present process employing Rh impregnated on a ceria coated zirconia monolith exhibits higher CH₄ conversion rates than a corresponding process using Rh supported on a conventional zirconia monolith (results in Table 1). In addition, an increased yield of H₂ and CO (synthesis gas) is also achieved in the inventive process. These examples show that superior performance is obtained at a significantly lower metal loading compared to conventional catalysts.

The use of the metal catalyst of the present invention for partial oxidation reactions disclosed herein is meant for illustrative purposes, and is not intended to limit the applicability of the metal catalyst. Instead, embodiments of the present invention can generally be used to enhance performance of monolith-based catalysts to suit various process needs. For example, the metal catalyst can readily be scaled up to larger sizes, e.g., greater than about 3", and preferably greater than about 10". By providing homogeneous metal dispersion over a suitably-coated monolith substrate, improved catalytic activity can be achieved, thereby resulting in a more cost-effective process requiring significantly less metal loading. Furthermore, an appropriate combination of metal, coating material and monolith substrate also allows synergistic or enhanced catalytic effect to be achieved, such as illustrated between rhodium and ceria, as well as providing a crack-free and durable metal catalyst that can be fabricated and adapted for various commercial processes.

## Claims

1. A metal catalyst comprising a metal supported by a ceria coating disposed on a ceramic monolith; wherein said metal is selected from the group consisting of nickel, cobalt, iron, platinum, palladium, iridium, rhenium, ruthenium, rhodium and osmium; said ceramic is selected from at least one of zirconia, alumina, yttria, titania, magnesia, ceria and cordierite; and said ceria coating has a weight percent between about 5% and about 30% with respect to said ceramic monolith.

2. A metal catalyst according to claim 1, wherein said weight percent of said ceria coating is between about 10% and about 20% with respect to said ceramic monolith.

3. A metal catalyst according to claim 1, wherein said metal is present in an amount between about 0.2% and about 5% by weight with respect to said ceramic monolith.

4. A metal catalyst according to any one of the preceding claims, wherein said ceramic monolith has a porosity between about 10 and about 100 pores per inch.

5. A metal catalyst according to any one of the preceding claims,
wherein said metal is selected from the group consisting of nickel, platinum, palladium and rhodium, and said ceramic is zirconia.

6. A metal catalyst according to any one of the preceding claims, wherein a porous material layer is disposed between said ceria coating and said ceramic monolith.

7. A method of preparing a metal catalyst, comprising:
a) providing a ceramic monolith;
b) forming a ceria coating over said ceramic monolith;
c) incorporating a metal into said ceria coating to form a metal-impregnated ceria coating; and
d) exposing said metal-impregnated ceria coating to a reducing environment; wherein said metal is selected from at least one of nickel, cobalt, iron, platinum, palladium, iridium, rhenium, ruthenium, rhodium and osmium; said ceramic is selected from at least one of zirconia, alumina, yttria, titania, magnesia, ceria and cordierite; and said ceria coating has a weight percent between about 5% and about 30% with respect to said ceramic monolith.

8. A method according to claim 7, wherein said step (b) comprises:
immersing said ceramic monolith in a cerium salt solution to coat said ceramic monolith with said cerium salt solution;
drying said coated ceramic monolith at room temperature; and
heating said coated ceramic monolith in air at a temperature between about 400°C and 800°C.

9. A method according to claim 8, wherein said cerium salt is selected from the group consisting of cerium nitrate, cerium chloride, and cerium ammonium nitrate.

10. A method according to any one of claims 7 to 9, wherein said step (c) comprises immersing said ceria-coated monolith substrate in a solution containing said metal, then drying and calcining to form said metal-impregnated ceria coating.

11. A method according to claim 10, wherein said metal in said metal-impregnated ceria coating has a weight percent of between about 0.2% and about 5% with respect to said ceramic monolith.

12. A method according to any one of claims 7 to 11, further comprising forming a porous material layer on said ceramic monolith prior to forming said ceria coating.

13. A process for the partial oxidation of hydrocarbon to produce hydrogen and carbon monoxide, comprising contacting a feed gas mixture containing a hydrocarbon gas and an oxygen-containing gas with a catalytically effective amount of a metal catalyst as claimed in any of claims 1 to 6, and said partial oxidation has an initiation temperature of below about 250°C.

14. The use of a metal catalyst according to any one of claims 1 to 6 as a catalyst of the partial oxidation of gaseous hydrocarbon to hydrogen and carbon monoxide.
